(19)

Europäisches
Patentamt
European
Patent Office
Office européen
des brevets

(11) **EP 2 613 209 A2**

(12) **EUROPEAN PATENT APPLICATION**

(43) Date of publication:
**10.07.2013 Bulletin 2013/28**

(51) Int Cl.:
***G05B 19/042*** (2006.01)

(21) Application number: **12199252.3**

(22) Date of filing: **21.12.2012**

| | |
|---|---|
| (84) Designated Contracting States:<br>**AL AT BE BG CH CY CZ DE DK EE ES FI FR GB<br>GR HR HU IE IS IT LI LT LU LV MC MK MT NL NO<br>PL PT RO RS SE SI SK SM TR**<br>Designated Extension States:<br>**BA ME**<br><br>(30) Priority: **05.01.2012 US 201213343816**<br><br>(71) Applicant: **General Electric Company<br>Schenectady, New York 12345 (US)** | (72) Inventors:<br>• **Mazzaro, Maria Cecilia<br>Greenville, South Carolina 29615 (US)**<br>• **Movsichoff, Bernardo Adrian<br>Greenville, South Carolina 29615 (US)**<br>• **Taware, Avinash Vinayak<br>Warwick, Pennsylvania 18974 (US)**<br><br>(74) Representative: **Cleary, Fidelma<br>GE International Inc.<br>Global Patent Operation-Europe<br>15 John Adam Street<br>London WC2N 6LU (GB)** |

(54) **System and method for selecting a representative sensor set of a power plant based on observability**

(57)     A system (10) for selecting a representative sensor set of a power plant is provided including a computer (101). The computer has a memory (104). The memory (104) stores a list of all feasible sensor sets, and at least one variable that is used to calculate a local minimum value of a cost function and a cost function value. The computer includes control logic for executing an algorithm. The computer includes control logic for selecting a proposed sensor set from the list of all feasible sensor sets. The proposed sensor set is based on a specific iteration of the algorithm. The control module includes control logic for determining if the system is observable using the proposed sensor set. The control module includes control logic for determining if the cost function value is less than the local minimum value of the cost function, if the system is observable using the proposed sensor set.

FIG. 2

EP 2 613 209 A2

**Description**

BACKGROUND OF THE INVENTION

The subject matter disclosed herein relates to a system and method for selecting a representative sensor set of a power plant.

One issue that often arises when designing a power plant such as, for example, a wind farm or a thermal plant, is how to instrument the power plant with sensors. Specifically, a set of sensors that effectively monitor the power plant either for maintenance, operation, or controls with the least amount of predefined cost measure is usually sought after. This set of sensors may be referred to as a representative sensor set. The representative sensor set depends on the application, as a set of sensors required for condition monitoring may be different from a set of sensors required for unit operation and controls.

The representative sensor set is based on the observability of the internal states of the power plant that are required for condition monitoring, controls, or operation. The usual approach is to install at least as many sensors as there are required internal states. However, there is a possibility that a fewer amount of sensors may actually be needed to observe all of the required internal states.

One difficulty in defining the representative sensor set is based on machine acquisitions. Specifically, some machines come with a predefined set of sensors. During acquisition of machine, design documentation may be lost or misplaced. Thus, engineers have limited insight into the rationale behind a specific set of sensors that have been selected.

BRIEF DESCRIPTION OF THE INVENTION

According to a first aspect of the invention, a computer-implemented method of selecting a representative sensor set of a power plant is provided. The method includes providing a computer having a memory. The memory stores a list of all feasible sensor sets, and at least one variable that is used to calculate a local minimum value of a cost function and a cost function value. The computer includes control logic for executing an algorithm. The method includes selecting a proposed sensor set from the list of all feasible sensor sets. The proposed sensor set based on a specific iteration of the algorithm. The method includes determining if the proposed sensor set can be used to observe the required plant internal states. If the proposed sensor set can be used to observe the required plant internal states, the method also includes determining if the cost function value is less than the local minimum value of the cost function. The cost function value represents a cost function value at the specific iteration of the algorithm. The method includes determining that the proposed sensor set is the representative sensor set of the power plant if the cost function value of the representative sensor set is the minimum value of the cost function.

The invention further resides in a computer algorithm comprising computer program code means adapted to perform the above method when executed by a computer and in the algorithm embodied on a computer readable medium.

According to another aspect of the invention, a system for selecting a representative sensor set of a power plant is provided including a computer. The computer has a memory. The memory stores a list of all feasible sensor sets, and at least one variable that is used to calculate a local minimum value of a cost function and a cost function value. The computer includes control logic for executing the algorithm described above.

These and other advantages and features will become more apparent from the following description taken in conjunction with the drawings.

BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:

FIG. 1 is a schematic illustration of a system for selecting a representative sensor set of a power plant; and

FIG. 2 is a process flow diagram for operating the system as shown in FIG. 1.

The detailed description explains embodiments of the invention, together with advantages and features, by way of example with reference to the drawings.

DETAILED DESCRIPTION OF THE INVENTION

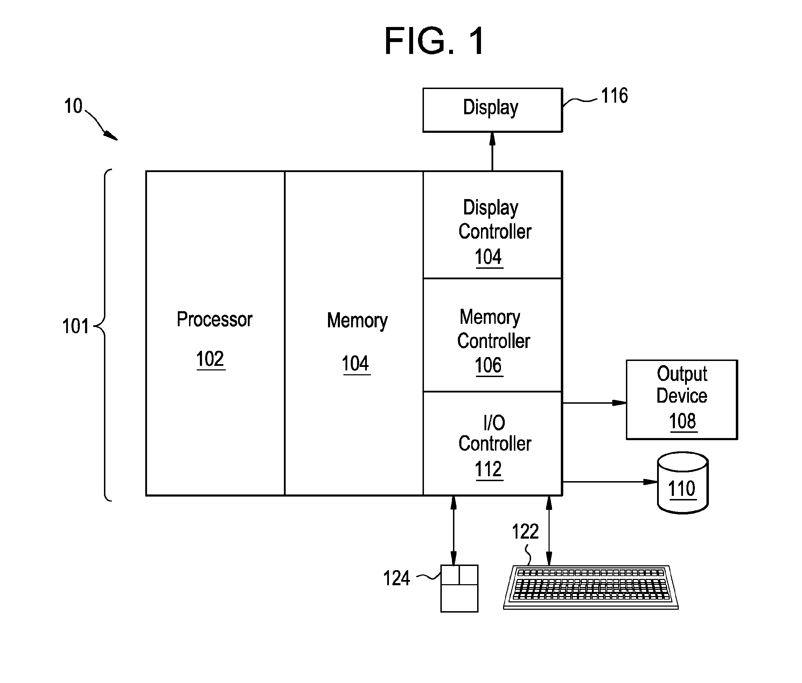

Turning now to FIG. 1, a block diagram illustrates an exemplary system 10 for selecting a proposed or representative sensor set of a power plant (not shown). The system 10 is shown to include a computer 101. As can be appreciated, the system 10 can include any computing device, including but not limited to, a desktop computer, a laptop, a server, a portable handheld device, or any other electronic device.

The computer 101 is shown to include a processor 102, a memory 104 coupled to a memory controller 106, one or more input and/or output (I/O) devices 108, 110 (or peripherals) that are communicatively coupled via a local input/output controller 112, and a display controller 114 coupled to a display 116. In an exemplary embodiment, a conventional keyboard 122 and mouse 124 may be coupled to the input/output controller 112. When the computer 101 is in operation, the processor 102 is configured to execute instructions stored within the memory 104, to communicate data to and from the memory 104, and to generally control operations of the computer 101 pursuant to the instructions. The processor 102 may be any custom made or commercially available processor, a central processing unit (CPU), an auxiliary processor among several processors associated with the computer 101, a semiconductor based microprocessor (in the form of a microchip or chip set), a macroprocessor, or generally any device for executing instructions.

In various embodiments, the memory 104 stores the instructions that are executed by the processor 102. The instructions stored in memory 104 may include one or more separate programs, each of which comprises an ordered listing of executable instructions for implementing logical functions. The computer 101 can include one or more sub-modules and datastores. As can be appreciated, the sub-modules can be implemented as software, hardware, firmware, a combination thereof, and/or other suitable components that provide the described functionality. As used herein, the term module and sub-module refers to an Application Specific Circuit (ASIC), an electronic circuit, a processor (shared, dedicated, or group) and/or memory that executes one or more software or firmware programs, a combinational logic circuit, and/or other suitable components that provide the described functionality.

The system 10 selects a representative sensor set of the power plant (not shown). In one exemplary embodiment, the power plant is a wind farm or a thermal plant however it is to be understood that other types of power plants may be used as well. The computer 101 includes control logic or circuitry for determining the representative sensor set of the power plant. The representative sensor set of the power plant is the sensor set that has the least amount of cost, and still supports the monitoring, control, or operation of the power plant.

The cost of the representative sensor set may be based on a variety of factors. For example, the cost of the representative sensor set may be based on the actual or hardware cost $C_{hw}$ of the sensors. The cost of the representative sensor set may further be based on the sensor installation and replacement cost $C_{inst}$. The sensor installation and replacement cost $C_{inst}$ takes into account remote locations of a power plant, environmental conditions, and operational constraints. For example, replacing an accelerometer sensor on a blade of an off-shore wind turbine (not shown) may only be possible during summer and fall seasons. In another example, replacing a speed sensor in a gas turbine rotor may only be possible during a power outage.

The cost of the representative sensor set may also be based on the number of identical sensors N that are employed, and configuration of the sensors (e.g. if the sensors are in parallel or series) in the power plant for redundant operation and increased reliability. The cost of the representative sensor set may also be based on sensor reliability R at mission time T. The sensor reliability at mission time R(T) may be the sensor system reliability if several identical sensors are used in the power plant. Mission time is generally the intended time range for operation of an asset. For example, for a safety instrumented device for some types of gas turbines includes a mission time of about 22 years; mechanical components for some types of wind turbines are designed for a mission time of 20 years. The cost of the representative sensor set may also be based on the sensor (or sensor system) probability of failure on demand PFD (T), which is the probably that the sensor fails when required to operate. The probability of failure on demand PFD(T) is related to sensor reliability R(T) as PFD(T) = 1 - R(T). The memory 104 of the computer 101 stores the hardware cost $C_{hw}$, the sensor installation and replacement cost $C_{inst}$, the number of identical sensors N, the sensor reliability R(T), and the probability of failure on demand PFD(T). The computer 101 includes control logic for calculating a minimum value of the cost function $\Phi, \Phi^*_{min}$, based on the hardware cost $C_{hw}$, the sensor installation and replacement cost $C_{inst}$, the number of identical sensors N, the sensor reliability R(T), and the probability of failure on demand PFD(T). Specifically, in one exemplary embodiment, the value of the cost function $\Phi$ may be determined by the following equation:

$$\Phi = \sum_i c_{1i} \times N_i \times C_{hw,\,i} + c_{2i} \times C_{inst,\,i} + c_{3i} \times PFD_i(T)$$

with weight factors $\{c_{1i}, c_{2i}, c_{3i}\}$ as positive constants. The minimum value of the cost function $\Phi^*_{min}$ achieves the least amount of hardware cost, installation cost, and probability of failure at mission time.

The memory 104 of the computer 101 also stores a plurality of required internal states x of the power plant. The required internal states x may not always be measured directly with existing sensor sets due to harsh conditions, or because the required internal states x are a mathematical abstraction. However, the required internal states x may be inferred from existing measurements and a dynamic model of the power plant. The number of required internal states x may depend on the application. For example, the internal required states x for a gas turbine monitoring may be compressor and turbine efficiency, as well as generator electrical power and exhaust temperature. The internal required states x for a wind turbine blade pitch angle control may be average wind speed and tower top fore-aft speed, electrical power and rotor speed. The memory 104 of the computer 101 also stores a variable $\eta_x$ that indicates the number of required internal states that need to be determined.

The memory 104 of the computer 101 stores a collection or list of all possible or feasible sensor sets $\{Y_k\}$. For example, a wind turbine may require rotor and generator speed sensors, anemometer, accelerometers located on the tower top, and accelerometers along the blade. In another example, a gas turbine may require a firing temperature sensor, a rotor speed sensor, and compressor and turbine inter-stage temperature and pressure sensors. The computer 101 includes control logic for determining the total number of possible or feasible sensor arrangements L in the power plant. For example, if the list of all feasible sensor sets $\{Y_k\}$ include sensors s1, s2, and s3, then the total number of feasible sensor arrangements L would be 7, i.e. s1, s2, s3, s1 and s2, s1 and s3, s2 and s3, s1 and s2 and s3.

The memory 104 of the computer 101 stores a plant model or component models that are based on the behavior of the power plant. The power plant generally contains several components; therefore the plant model is a collection of several component models. For example, the model of a gas turbine system may include a compressor model, a combustor model, and a turbine model. In another example, the model of a combined cycle power plant may include models of several gas turbines, a model of a heat reheat steam generator, and a model of a steam turbine. In another example, the model of a wind turbine system may include a drive-train model, a generator model and a tower model. In yet another example, the model of a wind farm includes models of several wind turbines and of the electrical grid. The model of the power plant includes the following equations:

$$\dot{x}(t) = f(x(t),t) + u(t)$$

$$y(t) = h(x(t),t)$$

where t denotes time, x(t) is a vector containing the power plant required internal states, u(t) is the power plant driving force (for example, wind speed and pitch angle in a wind turbine or fuel flow in a gas turbine), y is a vector with available sensor measurements, f(x(t), t) is the process matrix and h(x(t), t) is the measurement matrix. In order for the plant model to be implemented in the processor 102 of the computer 101, it may be necessary to obtain a discrete time equivalent of the plant model. In the event the equations for the required internal states x and the available sensor measurements y are not linear, the computer 101 may also include control logic for the linearization of the nonlinear model.

The computer 101 includes control logic for evaluating system observability based on the process matrix f(x(t), t) and the measurement matrix h(x(t), t). In the event of a time linear time invariant system (continuous or discrete time), one exemplary approach for evaluating system observability is by an observability matrix θ, which is expressed by the following equation:

$$\theta = \begin{bmatrix} C \\ CA \\ CA^2 \\ . \\ . \\ . \\ CA^{n-1} \end{bmatrix}$$

The system observability provides information about the observability of the required internal states x of the power plant. Specifically, the system observability indicates whether it is possible to determine the required internal states x at the current time based on past measurements, collected using a proposed sensor set. In the case of linear time invariant systems, if the rank p of the system observability matrix $\theta$ is equal to $\eta_x$ (where $\eta_x$ represents the number of required internal plant states), this is an indication that the system is observable using proposed sensor set. That is, the required internal states x are recoverable using the proposed sensor set. The rank $\rho$ of the system observability matrix $\theta$ is defined by the maximum number of linearly independent rows or columns of the system observability matrix $\theta$. In the case of nonlinear systems, the computer 101 includes control logic for assessing observability based on Lie derivatives.

The computer 101 includes control logic for re-calculating the system observability matrix $\theta$ each time the proposed sensor set changes. Specifically, each feasible sensor arrangement L represents one of the proposed sensor sets. Every time the proposed sensor set is changed, an iteration k of an algorithm that is used to determine the representative sensor set of the power plant is executed by the computer 101. For example, if the list of all feasible sensor sets $\{Y_k\}$ includes sensors s1, s2, and s3, then the total number of feasible sensor arrangements L would be 7, and k=1,2,3,4,5,6, and 7. That is, up to seven iterations k of the algorithm may be executed by the computer 101.

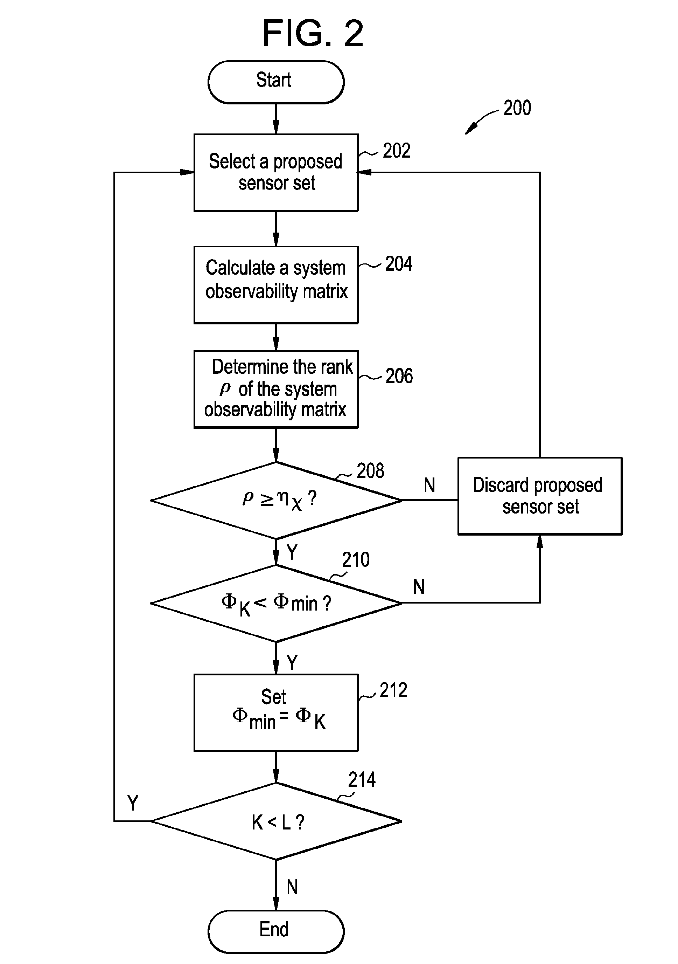

FIG. 2 is an illustration of a process flow diagram 200 that is executed by the computer 101. As can be appreciated in light of the disclosure, the order of operation within the methods is not limited to the sequential performance as illustrated in FIG. 2, but may be performed in one or more varying orders as applicable and in accordance with the present disclosure. As can be appreciated, one or more steps can be added or deleted from the method without altering the spirit of the method.

Process 200 begins at 202, where the computer 101 includes control logic for selecting the proposed sensor set from of all of the possible or feasible sensor sets $\{Y_k\}$, where the proposed sensor set is based on the specific iteration k of the algorithm. For example, if the algorithm is at the first iteration where k=1, then a proposed sensor set based on when k=1 will be selected. Process 200 may then proceed to 204.

In 204, the computer 101 includes control logic for calculating a system observability matrix $\theta$ based on the process matrix f(x(t), t) and the measurement matrix h((x(t), t). Process 200 may then proceed to 206.

In 206, the computer 101 includes control logic for determining the rank $\rho$ of the system observability matrix $\theta$. The computer 101 includes control logic for determining if the rank $\rho$ of the system observability matrix $\theta$ is equal to $\eta_x$. In the event that the rank $\rho$ of the system observability matrix $\theta$ is not equal to $\eta_x$, this is an indication that the required internal states are not observable using the proposed representative sensor set, or that the system is not observable. It should be noted that the system observability matrix $\theta$ may be calculated if the system is linear. Thus, if the system is nonlinear the computer 101 includes control logic for assessing observability based on another approach such as, for example, Lie derivatives. In the event the system is not observable, the proposed sensor set is then discarded, and process 200 may then terminate. However, as long as the system is observable using the proposed sensor set, then process 200 may then proceed to 210.

In 208, the computer 101 includes control logic for determining if the rank $\rho$ of the system observability matrix $\theta$ is equal to or greater than the number of required internal states $\eta_x$ that need to be determined. In the event that the rank $\rho$ of the system observability matrix $\theta$ is neither equal to nor greater than (in other words, less than) the number of required internal states $\eta_x$, then process 200 may then discard the proposed sensor set, and proceed to back to 202. In the event that rank $\rho$ of the system observability matrix $\theta$ is equal to or greater than the number of required internal states $\eta_x$, then process 200 may proceed to 210.

In 210, the computer 101 includes control logic for determining if a cost function value $\Phi_k$ is less than a local minimum value of the cost function $\Phi_{min}$. The cost function value $\Phi_k$ represents the cost function value at the k-th iteration of the algorithm k. Specifically, for example, if the algorithm k is at the first iteration where k=1, and if the proposed sensor set that has been selected includes sensors s1, s2, and s3, then the local minimum value of the cost function $\Phi_{min}$ would be based on sensors s1, s2, and s3. In the event that the cost function value $\Phi_k$ is not less than the local minimum value of the cost function $\Phi_{min}$, process 200 may then discard the proposed sensor set, and proceed back to 202. In the event that the cost function value $\Phi_k$ is less than the local minimum value of the cost function $\Phi_{min}$, the proposed sensor set is defined as the representative plant sensor set, $\Phi_k$. Specifically, process 200 may then proceed to step 212, where the cost function value $\Phi_k$ is defined as the new local minimum value of the cost function $\Phi_{min}$. In other words, the local minimum value of the cost function $\Phi_{min}$, is set to be equal to the cost function value $\Phi_k$. Process 200 may then proceed to 214.

In 214, the computer 101 determines if the current iteration k of the algorithm is less than the total number of feasible sensor arrangements L. In the event that the current iteration k of the algorithm is greater than the total number of feasible sensor arrangements L this is an indication that the local minimum value of the cost function $\Phi_{min}$ is the minimum value among all feasible sensor sets.. Therefore, the proposed sensor set that achieves the minimum value of the cost function value $\Phi^*_{min}$ is the representative sensor set of the power plant. Process 200 may then terminate. In the event that the current iteration k of the algorithm is less than the total number of feasible sensor arrangements L, process 200 may return to 202.

A technical effect of the present invention determines the representative sensor set of the power plant that will provide the least amount of cost while still supporting the required monitoring, control, or operation of the power plant.

The representative sensor set results in reduced troubleshooting and maintenance as well as enhanced system capability of the power plant, without redundant or unneeded sensors.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

**Claims**

1. A computer-implemented method of selecting a representative sensor set of a power plant, comprising:

   selecting (202) a proposed sensor set from the list of all feasible sensor sets by the computer, the proposed sensor set being based on a specific iteration of an algorithm;
   determining if the system is observable using the proposed sensor set;
   determining if the cost function value is less than the local minimum value of the cost function if the system is observable using the proposed sensor set, the cost function value representing the cost function at the specific iteration of the algorithm; and
   determining that the proposed sensor set is the representative sensor set of the power plant if the cost function value is the minimum value of the cost function.

2. The method as recited in claim 1, comprising calculating (204) a system observability matrix based on the proposed sensor set and the specific iteration of the algorithm.

3. The method as recited in claim 1 or 2, comprising determining (206) a rank of the system observability matrix, wherein the rank indicates if the system is observable using the proposed sensor set.

4. The method as recited in claim 3, comprising determining (208) if the rank of the system observability matrix is equal to or greater than a number of required internal states.

5. The method as recited in any of claims 1 to 4, comprising storing at least one component model based on behavior of the power plant in memory (104).

6. The method as recited in claim 5, wherein the at least one component model includes a process matrix and a measurement matrix, wherein the system observability matrix is based on the process matrix and the measurement matrix.

7. The method as recited in any of claims 1 to 6, comprising discarding the proposed sensor set if the required plant internal states are not observable using the proposed sensor set.

8. The method as recited in any of claims 1 to 7, wherein the cost function is based on a hardware cost, an installation and replacement cost, a number of identical sensors, a sensor reliability at mission time, and a probability of failure on demand of the proposed sensor set.

9. The method of claim 8, wherein the cost function is based on an equation:

$$\Phi = \sum_i c_{1i} \times N_i \times C_{hw,i} + c_{2i} \times C_{inst,i} + c_{3i} \times PFD_i(T)$$

wherein $c_{1i}$, $c_{2i}$, and $c_{3i}$ are positive constant weight factors, $\Phi$ is the cost function, $C_{hw}$ is the hardware cost, $C_{inst}$ is the installation and replacement cost, N is the number of identical sensors, and PFD(T) is probability of failure on demand of the proposed sensor set.

10. The method of any preceding claim, wherein further comprising determining if the specific iteration of the algorithm is less than a total number of the list of all feasible sensor sets.

11. The method of any preceding claim, wherein the representative sensor set of the power plant represents a sensor set with the least amount of cost while still supporting at least one of monitoring, control, or operation of the power plant.

12. The method of any preceding claim, wherein the power plant is one of a thermal plant, a wind farm, a gas turbine and a wind turbine.

13. A computer algorithm comprising computer program code means adapted to perform the method of any of claims 1 to 12, when executed by a computer.

14. The computer algorithm of claim 13, embodied on a computer readable medium.

15. A system (10) for selecting a representative sensor set of a power plant, comprising:

a computer (101) having a memory (104), the memory (104) storing a list of all feasible sensor sets $\{Y_k\}$, and at least one variable that is used to calculate a local minimum value of a cost function and a cost function value, the computer including control logic for executing the algorithm, of claim 13 or 14.

# FIG. 1

# FIG. 2

```
                    ┌─────────┐
                    │  Start  │
                    └────┬────┘
                         │                        ⟋ 200
    ┌──────────────────┐ ▼                ~202
    │  ┌───────────────────────┐
    │  │  Select a proposed    │ ~202
    │  │  sensor set           │◄──────────────────┐
    │  └───────────┬───────────┘                   │
    │              ▼                                │
    │  ┌───────────────────────┐                    │
    │  │  Calculate a system   │ ~204               │
    │  │  observability matrix │                    │
    │  └───────────┬───────────┘                    │
    │              ▼                                │
    │  ┌───────────────────────┐                    │
    │  │  Determine the rank   │ ~206               │
    │  │  ρ of the system      │                    │
    │  │  observability matrix │                    │
    │  └───────────┬───────────┘                    │
```

$\rho \geq \eta_X$ ?  —N→  Discard proposed sensor set

$\Phi_K < \Phi_{min}$ ?  —N→

Set $\Phi_{min} = \Phi_K$

$K < L$ ?

End